# EUROPEAN PATENT APPLICATION

(11) **EP 3 098 380 A1**
(43) Date of publication of application: **30.11.2016**
(21) Application number: 16170073.7
(22) Date of filing: 18.05.2016
(51) Int. Cl.: E21B 33/13

(54) **METHOD OF SEALING WELLS BY INJECTION OF SEALANT**

(30) Priority: 27.05.2015 US 201562166904 P; 08.09.2015 US 201514847971
(71) Applicant: Wild Well Control, Inc., Houston, TX 77073 (US)
(72) Inventor: SABINS, Fred, Montgomery, TX 77316 (US); MEADE, Clifton, Houston, TX 77073 (US); BROWN, David, Cypress, TX 77429 (US); WATTERS, Jeffrey, Spring, TX 77379 (US); LEAL, Jorge Esteban, Houston, TX 77021 (US)
(74) Representative: Prugneau, Philippe

(57) **Abstract**

A method for sealing a well includes: placing an obstruction in a bore of an inner tubular string; forming an opening through a wall of the inner tubular string above the obstruction; mixing a resin and a hardener to form a sealant having a density greater than a density of fluid present in the bore and present in an annulus formed between the inner tubular string and an outer tubular string; and injecting the sealant into the annulus. The sealant falls down the annulus to the opening. A portion of the sealant is diverted through the opening and into the bore. The sealant cures to form a balanced plug in the annulus and the bore.

## Description

### Field of the Disclosure

The present disclosure generally relates to a method of sealing an annulus and/or pipe of a well by injection of sealant.

### Description of the Related Art

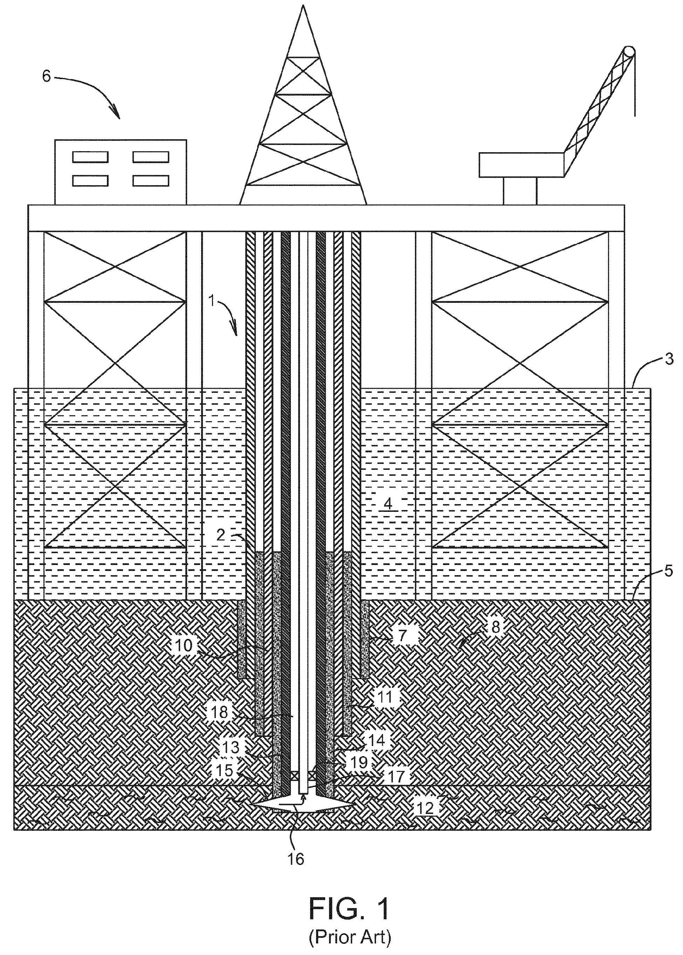

Figure 1 illustrates a prior art platform well. A drive pipe 2 may be set from above a surface (aka waterline) 3 of the sea 4, through the sea, and into the seafloor (aka mudline) 5. The drive pipe 2 allows the wellhead (not shown) to be located on a platform 6 above the waterline 3.

Once the drive pipe 2 has been set and (may or may not be) cemented 7, a subsea wellbore 8 may be drilled into the seafloor 5. A string of casing, known as surface casing 10, may then be run-in and cemented 11 into place. As the wellbore 8 approaches a hydrocarbon-bearing formation 12, i.e., crude oil and/or natural gas, another string of casing, known as production casing 13, may be run-into the wellbore 8 and cemented 14 into place. Thereafter, the production casing string 13 may be perforated 15 to permit the fluid hydrocarbons 16 to flow into the interior of the casing. The hydrocarbons 16 may be transported from the production zone of the wellbore 8 through a production tubing string 17 run into the wellbore 8. An annulus 18 defined between the production casing string 13 and the production tubing string 17 may be isolated from the producing formation 12 with a packer 19.

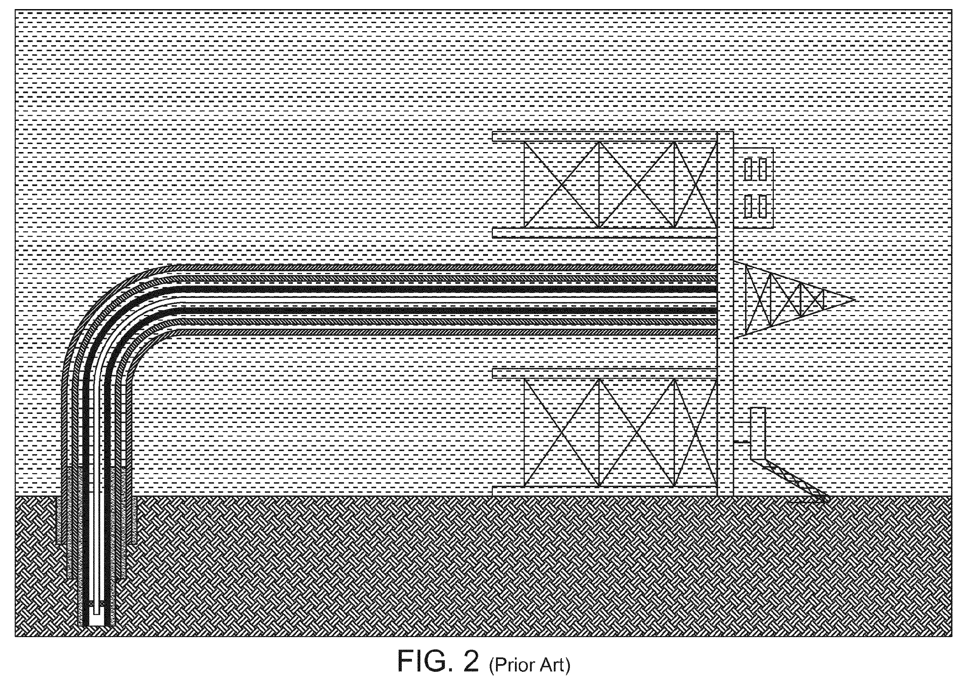

Figure 2 illustrates the platform 6 and completion 1 damaged by a hurricane. Hurricanes in the Gulf of Mexico have damaged or destroyed several platforms 6 along with the completions 1. The platforms 6 and the completions 1 may have sunk to the seafloor 5. Many of the wells had been in production for many years, thereby depleting the formations 12 such that the platform operators desire to plug and abandon the wells. The damage to the platform 6 and completion 1 makes traditional abandonment operations unfeasible.

### Summary of the disclosure

The present disclosure generally relates to a method of sealing an annulus and/or pipe of a well by injection of sealant. In one embodiment, a method for sealing a well includes: placing an obstruction in a bore of an inner tubular string; forming an opening through a wall of the inner tubular string above the obstruction; mixing a resin and a hardener to form a sealant having a density greater than a density of the well fluid present in the bore and present in an annulus formed between the inner tubular string and an outer tubular string; and injecting the sealant into the annulus. The sealant falls down the annulus to the opening. A portion of the sealant is diverted through the opening and into the bore. The sealant cures to form a balanced plug in the annulus and the bore.

In another embodiment, a method for sealing a well includes: placing an obstruction in a bore of an inner tubular string; forming an opening through a wall of the inner tubular string above the obstruction; mixing a resin and a hardener to form a sealant having a density greater than a density of fluid present in the bore and present in an annulus formed between the inner tubular string and an outer tubular string; and injecting the sealant into the annulus; and injecting the sealant into the bore. The sealant falls down the bore to the opening. A portion of the sealant is diverted by the obstruction, through the opening, and into the annulus. The sealant cures to form a balanced plug in the annulus and the bore.

In another embodiment, a method for sealing a well includes: mixing a resin and a hardener to form a sealant having a density greater than a density of fluid present in an annulus formed between an inner tubular string and at least one of an outer tubular string and a formation of the well; and injecting the sealant into the annulus. The sealant falls down the annulus to the top of a defective cement sheath. The sealant cures to form a plug remediating the defective cement sheath.

### Brief description of the drawings

So that the manner in which the above recited features of the present disclosure can be understood in detail, a more particular description of the disclosure, briefly summarized above, may be had by reference to embodiments, some of which are illustrated in the appended drawings. It is to be noted, however, that the appended drawings illustrate only typical embodiments of this disclosure and are therefore not to be considered limiting of its scope, for the disclosure may admit to other equally effective embodiments.
Figure 1 illustrates a prior art platform well.
Figure 2 illustrates the platform and completion of the well damaged by a hurricane.
Figure 3 illustrates a diver tier-cutting the completion to begin the abandonment operation, according to one embodiment of the present disclosure.
Figure 4 illustrates deployment of a packoff.
Figure 5 illustrates engagement of the packoff with the remaining completion.
Figure 6 illustrates connection of a sealant flow line to the packoff and deployment of a lower bridge plug from a support vessel.
Figure 7A illustrates setting of the lower bridge plug in the production tubing string.
Figure 7B illustrates perforation of the production tubing string.
Figures 8-10 illustrate a mixing unit onboard the support vessel and operation thereof to form the sealant.
Figure 11A illustrates falling of the sealant down an annulus of the well. Figure 11B illustrates curing of the sealant to plug the production tubing string and the annulus.
Figure 12A illustrates cutting of the production tubing string. Figure 12B illustrates setting of an upper bridge plug in the production casing string.
Figure 13 illustrates cement plugging of a bore of the production casing string.
Figure 14 illustrates the diver supplying the sealant into the well and falling of the sealant down a bore of the production tubing string, according to another embodiment of the present disclosure.
Figure 15 illustrates falling of the sealant down the production casing bore to plug a casing annulus of the well, according to another embodiment of the present disclosure.
Figure 16 illustrates falling of the sealant down a bore of a subsea production tree, according to another embodiment of the present disclosure.
Figure 17A illustrates falling of the sealant down an annulus to remediate a primary cement sheath, according to another embodiment of the present disclosure. Figure 17B illustrates curing of the sealant to plug the annulus.

### Detailed description

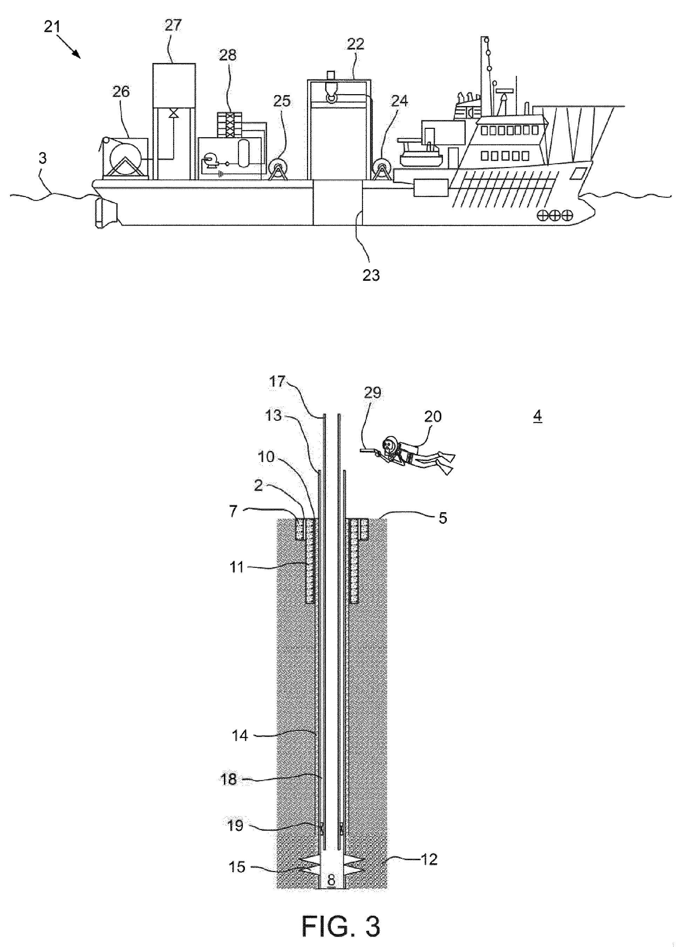

Figure 3 illustrates a diver 20 tier-cutting the completion 1 to begin the abandonment operation, according to one embodiment of the present disclosure. A support vessel 21 may be deployed to a location over the subsea wellbore 8. The vessel 21 may include a tower 22 located over a moonpool 23, a hoisting winch 24, a wireline winch 25, a flow line reel 26, a mixing unit 27, and a hydraulic power unit (HPU) 28.

The diver 20 may be dispatched from the support vessel 21 to the subsea wellbore 8. The diver 20 may then sever an upper portion of the completion 1 from a lower portion thereof using a saw 29, such as a band saw, reciprocating saw, or a diamond wire saw. The cut may be adjacent to a location where the completion 1 extends from the seafloor 5. The diver 20 may tier-cut the completion 1 so that a portion of the production casing string 13 and a portion of the production tubing string 17 extend from the seafloor 5.

Alternatively, a crane (not shown) may be used instead of the winch and tower. Alternatively, a remotely operated vehicle (ROV) (not shown) may be deployed instead of the diver 20. Alternatively, the mixing unit 27 and flow line reel 26 may be located on a support barge (not shown) adjacent to the support vessel 21.

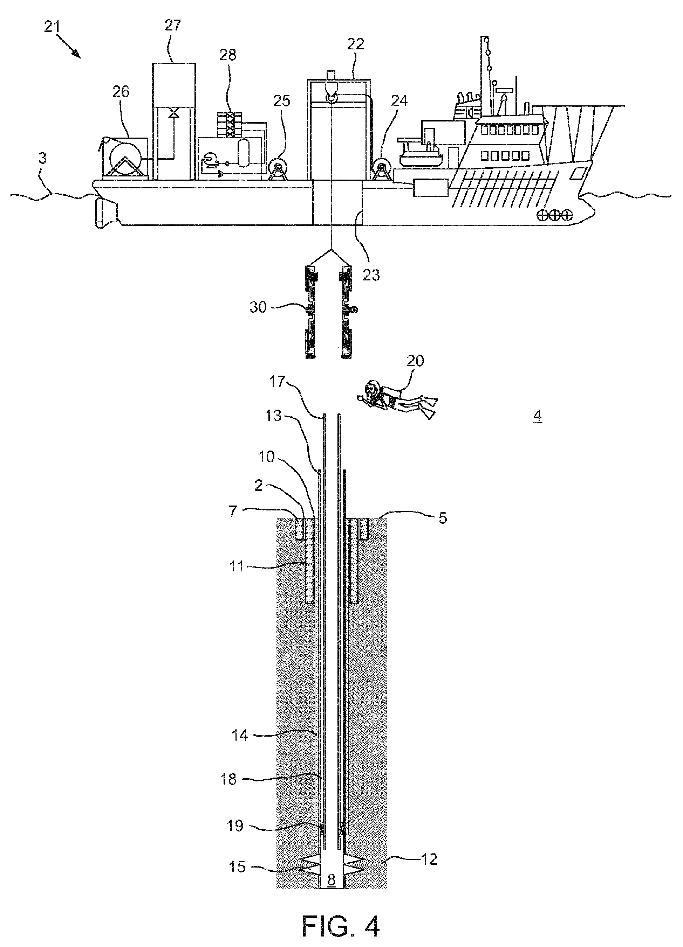

Figure 4 illustrates deployment of a packoff 30. The packoff 30 may include a clamp, such as retention flange, upper and lower annular blowout preventers (BOPs) (i.e., conical or spherical), a spool, an inlet, and a pressure gage. The packoff 30 may be lowered from the support vessel by the hoisting winch 24 to the diver 20. The diver 20 may guide the packoff 30 onto the tier-cut portion of the completion 1 and fasten the retention flange to the production casing string 13. A hydraulic umbilical 31 may then be connected from the HPU 28 onboard the support vessel 21 to hydraulic ports of the annular BOPs.

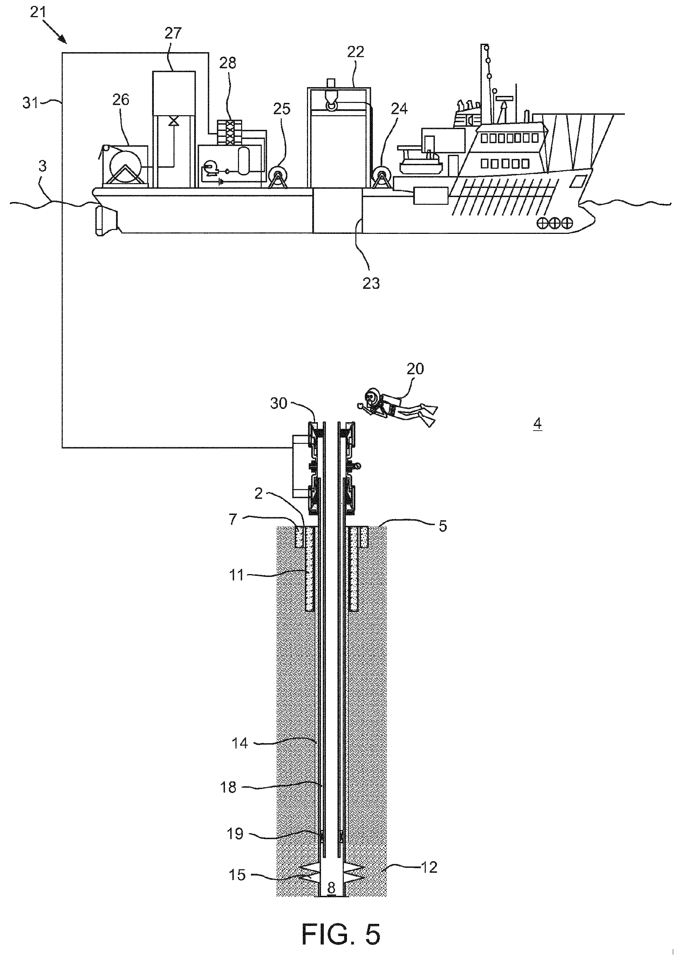

Figure 5 illustrates engagement of the packoff 30 with the remaining completion 1. The annular BOPs of the packoff 30 may then be operated by injection of hydraulic fluid from the HPU 28, through the umbilical 31, and into respective hydraulic ports thereof until respective packers thereof engage the respective production casing 13 and tubing 17 strings, thereby isolating the annulus 18 therebetween.

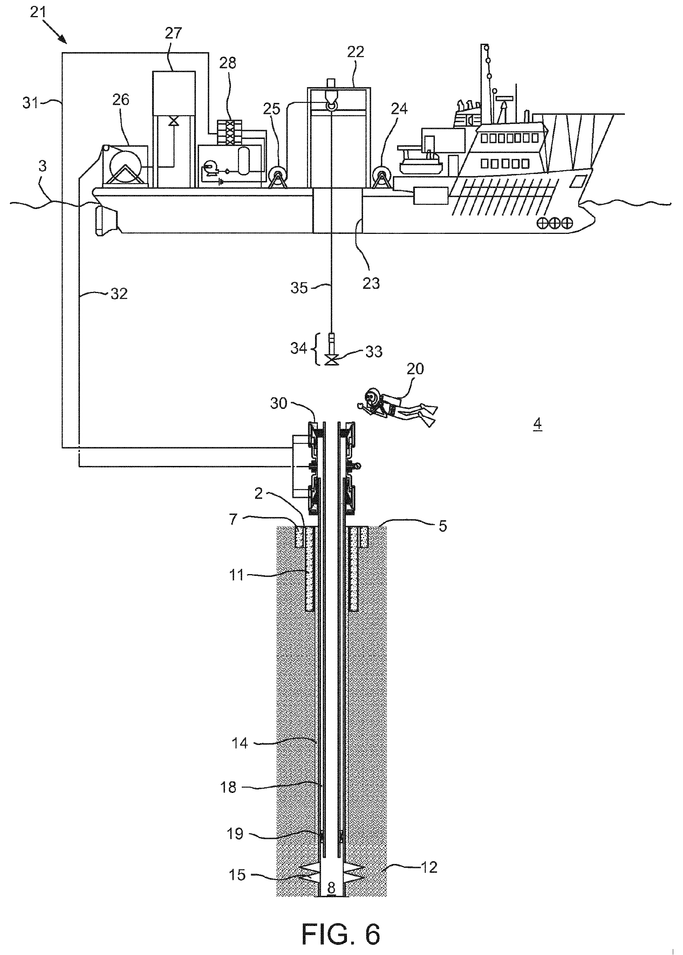

Figure 6 illustrates connection of a sealant flow line 32 to the packoff 30 and deployment of a lower bridge plug 33 from the support vessel 21. The flow line 32, such as hose, may be lowered to the diver 20 by unwinding from the reel 26. The diver 20 may connect the lower end of the flow line 32 to the inlet of the packoff 30. The upper end of the flow line 32 may be connected to an outlet of the mixing unit 27. A first bottomhole assembly (BHA) 34 may be connected to wireline 35 onboard the support vessel 21 and lowered therefrom into the production tubing bore. The first BHA 34 may include a cablehead, a collar locator, a setting tool, and the lower bridge plug 33.

Alternatively, the flow line 32 may be flex hose, stick pipe, or coiled tubing. Alternatively, if the completion 1 is still upright, the sealant 36 may be injected into the annulus 18 via the wellhead.

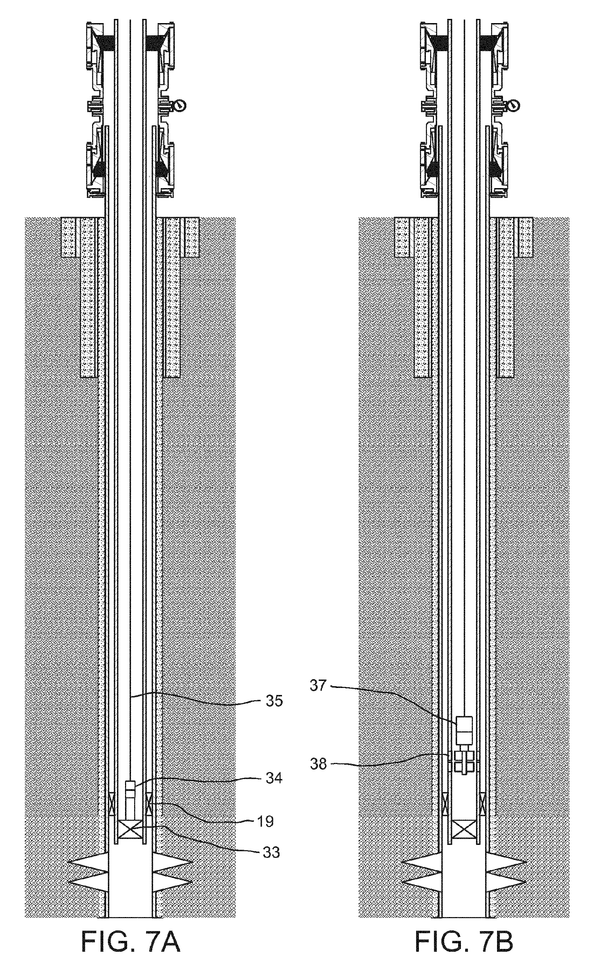

Figure 7A illustrates setting of the lower bridge plug 33 in the production tubing string 17. The first BHA 34 may be deployed to a setting depth adjacent to, such as just below, the production packer 19. Once the first BHA 34 has been deployed to the setting depth, electrical power may then be supplied to the first BHA via the wireline 35 to operate the setting tool, thereby expanding the lower bridge plug 33 against an inner surface of the production tubing string 17. Once the lower bridge plug 33 has been set, the setting tool may be released from the set plug. The setting tool may then be retrieved to the support vessel 21.

Alternatively, a packer or cement plug may be set instead of the bridge plug 33 or a sand bed poured instead of the bridge plug.

Figure 7B illustrates perforation of the production tubing string 17. The first BHA 34 may be disconnected from the wireline 35 and a second BHA 37 connected to the wireline. The second BHA 37 may include a cablehead, a collar locator, and a perforating gun. The second BHA 37 may be lowered from the support vessel 21 into the production tubing bore. The second BHA 37 may be deployed to a firing depth adjacent to, such as just above, the production packer 19. Once the second BHA 37 has been deployed to the firing depth, electrical power may then be supplied to the second BHA via the wireline 35 to fire shaped charges of the perforating gun into the production tubing string 17, thereby forming perforations 38 through a wall thereof. The second BHA 37 may then be retrieved to the support vessel 21.

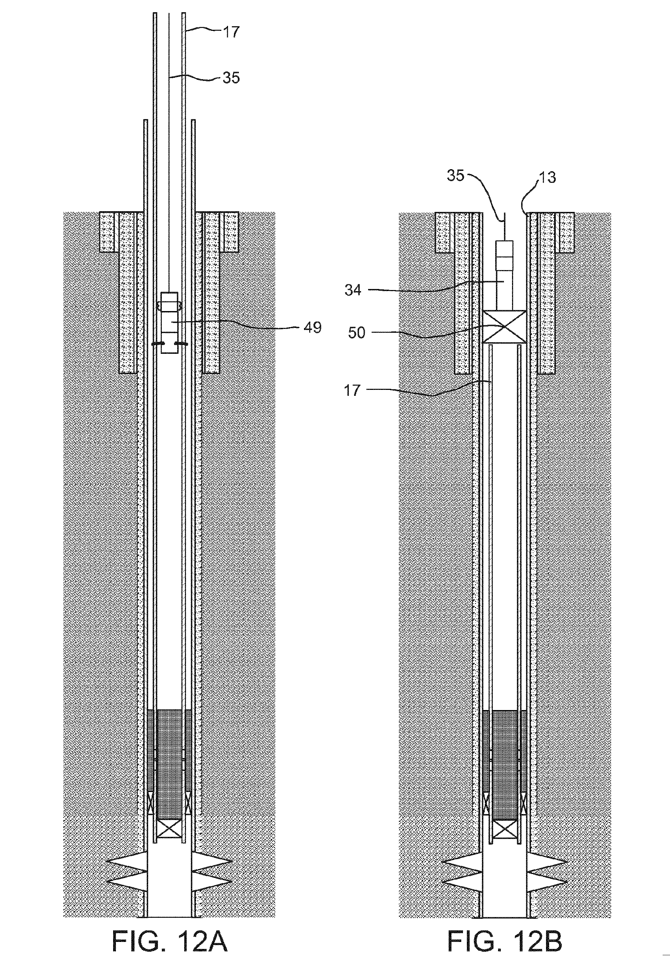

Alternatively, the first 34 and second 37 BHAs may be combined and the bridge plug set 33 and the production tubing string 17 perforated in a single round trip instead of two round trips. Alternatively, another type of opening besides perforations may be formed through the production tubing wall, such as by a wireline operated tubing cutter (Figure 12A), an abrasive jet cutter, a tubing punch, or a thermite torch. Alternatively, if the production tubing string 17 has already been breached by corrosion, the breach may be utilized, thereby obviating the need for perforation.

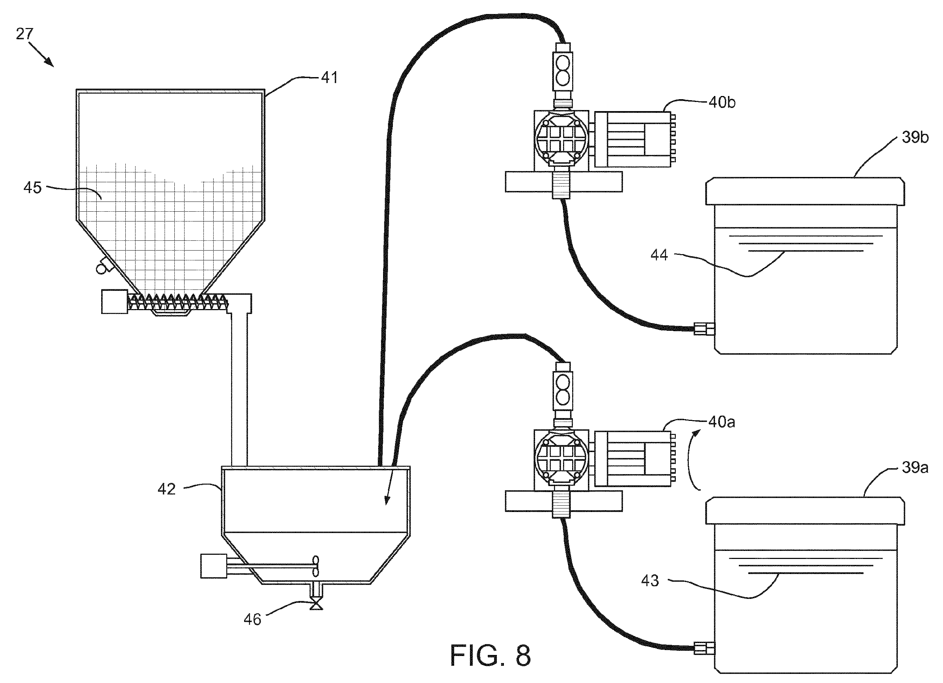

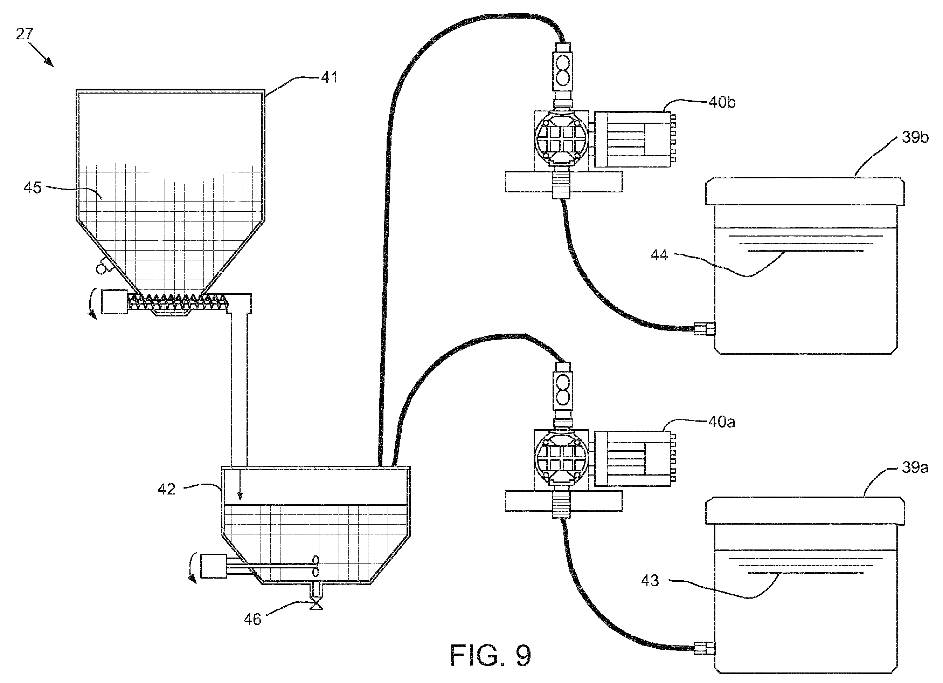

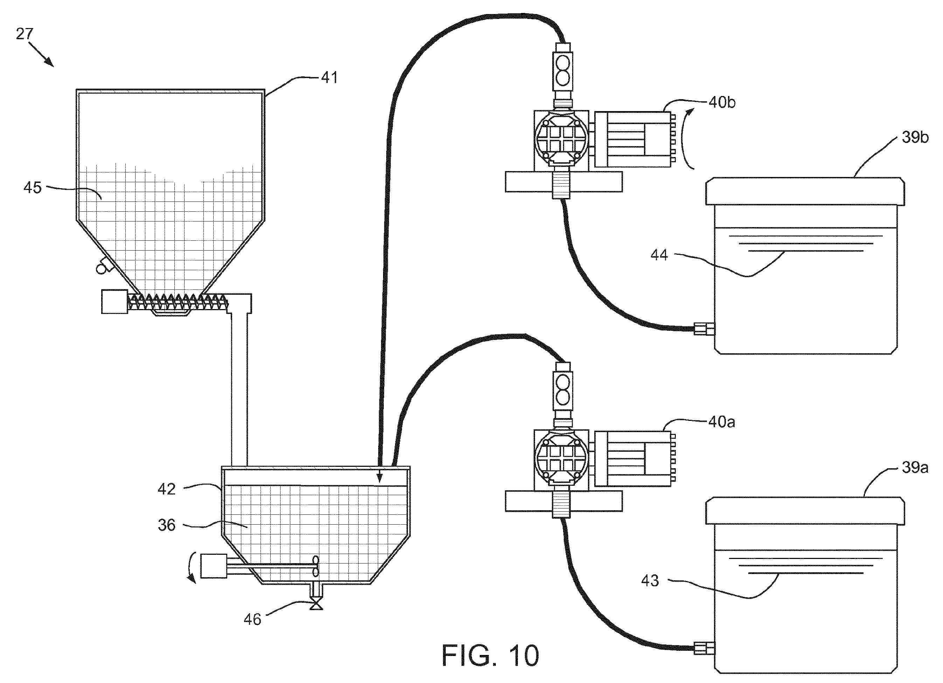

Figures 8-10 illustrate the mixing unit 27 onboard the support vessel 21 and operation thereof to form the sealant 36. The mixing unit 27 may include two or more liquid totes 39a,b, a transfer pump 40a,b for each liquid tote, a dispensing hopper 41, and a blender 42. Each transfer pump 40a,b may be a metering pump and the dispensing hopper 41 may be a metering hopper. An inlet of each transfer pump 40a,b may be connected to the respective liquid tote 39a,b.

A first 39a of the liquid totes 39a,b may include a resin 43. The resin 43 may be an epoxide, such as bisphenol F. A viscosity of the sealant 36 may be adjusted by premixing the resin 43 with a diluent, such as alkyl glycidyl ether, benzyl alcohol, or a combination thereof. The viscosity of the sealant 36 may range between one hundred and two thousand centipoise. The resin 43 may also be premixed with a bonding agent, such as silane. A second 39b of the liquid totes 39a,b may include a hardener 44 selected based on temperature in the wellbore 8. For low temperature, the hardener 44 may be an aliphatic amine or polyamine or a cycloaliphatic amine or polyamine, such as tetraethylenepentamine. For high temperature, the hardener may be an aromatic amine or polyamine, such as diethyltoluenediamine. The dispensing hopper 41 may include a particulate weighting material 45 having a specific gravity of at least two. The weighting material 45 may be barite, hematite, hausmannite ore, or sand.

Alternatively, the wellbore fluid may be non-aqueous and the resin 43 may also be premixed with a surfactant to maintain cohesion thereof as the sealant 36 falls therethrough. Alternatively, the resin 43 may also be premixed with a defoamer.

To form the sealant 36, the first transfer pump 40a may be operated to dispense the resin 43 into the blender 42. A motor of the blender 42 may then be activated to churn the resin 43. The hopper 41 may then be operated to dispense the weighting material 45 into the blender 42. The weighting material 45 may be added in a proportionate quantity such that a density of the sealant 36 is greater than a density of the wellbore fluid. The density of the sealant 36 may only be slightly greater than the density of the wellbore fluid, such as less than or equal to five percent greater than the density of the wellbore fluid. More specifically, the sealant density may be two-tenths pounds per gallon greater than the density of the wellbore fluid. For example if the wellbore 8 is filled with brine, such as seawater, having a (nominal) density of eight and a half pounds per gallon, then the sealant 36 may have a density of eight point seven pounds per gallon.

The second transfer pump 40b may be operated to dispense the hardener 44 into the blender 42. The hardener 44 may be added in a proportionate quantity such that a thickening time of the sealant 36 corresponds to a time required to pump the sealant to the packoff 30 plus a time required for the sealant to fall down the annulus 18, and plus a safety factor, such as one hour. Once the blender 42 has formed the sealant 36 into a homogenous mixture, a supply valve 46 connected to an outlet of the blender may be opened.

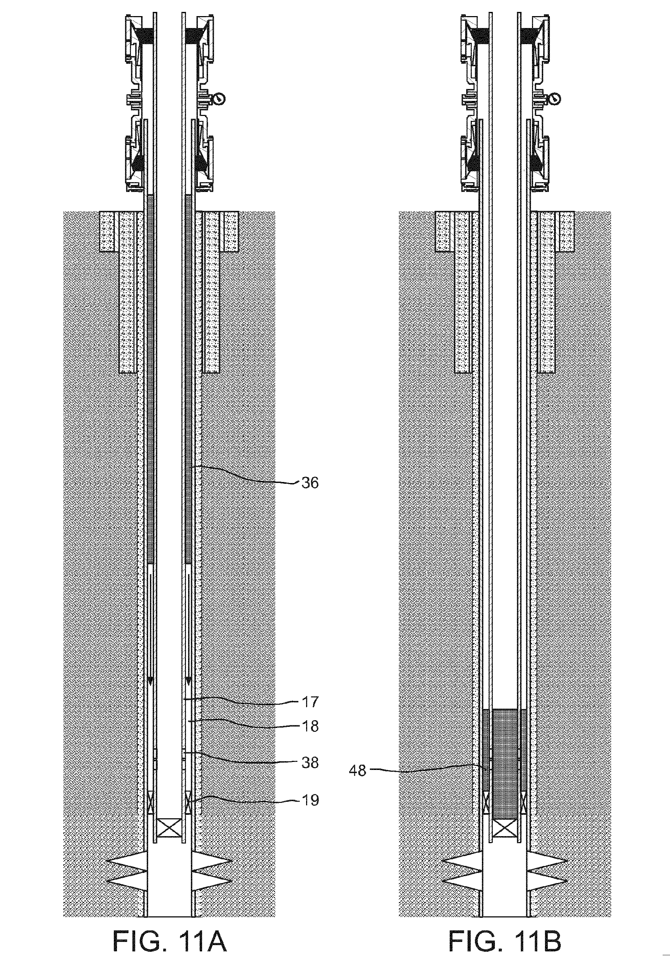

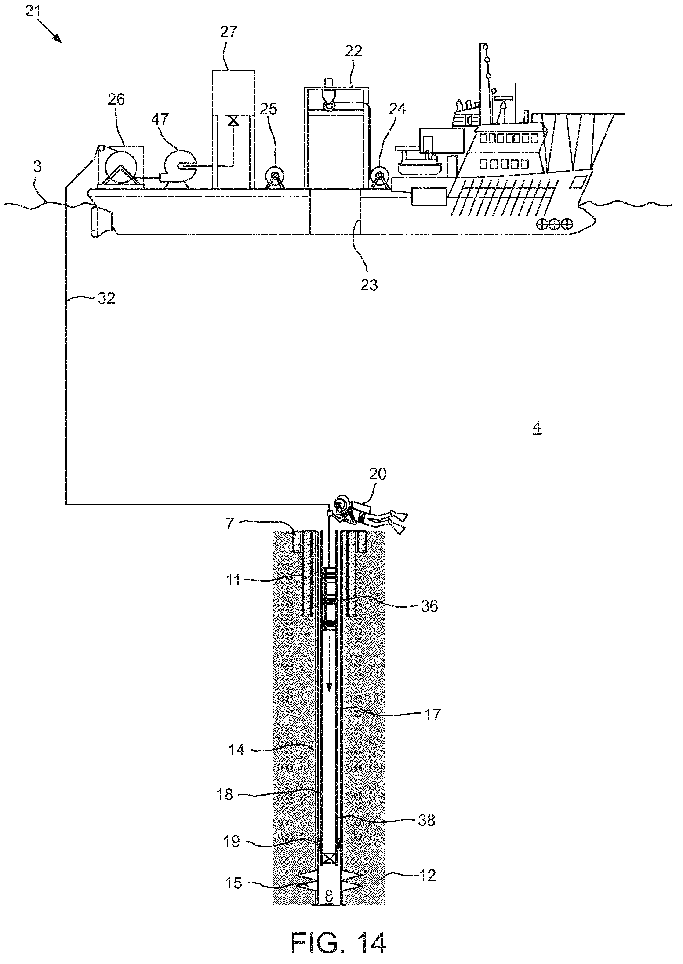

Figure 11A illustrates falling of the sealant 36 down the annulus 18 of the well. A delivery pump 47 (not shown, see Figure 14) may be operated to pump the sealant 36 from the blender 42 and into the flow line 32. The inlet of the delivery pump 47 may then be connected to a supply of chaser fluid (not shown), such as seawater, and the delivery pump operated to pump the chaser fluid into the flow line 32, thereby driving the sealant 36 through the flow line and to the packoff inlet. The delivery pump 47 may be a metering pump and may be shutoff once a volume of the chaser fluid has been pumped corresponding to a volume of the flow line 32, thereby ensuring that the sealant 36 has been injected into the annulus 18 via the packoff inlet. Once the sealant 36 has been injected into the annulus 18, the greater density of the sealant may cause the sealant to fall down the annulus under gravitational acceleration. The sealant 36 may arrive at the production packer 19 and a portion of the sealant may be diverted through the perforations 38 and into the bore of the production tubing string 17 until a depth of the sealant top in the production tubing bore is equal to a depth of the sealant top in the annulus 18 (aka balanced condition or U-tubing). Once balanced, a length of the sealant 36 in the annulus may be greater than or equal to fifty, one hundred, one hundred and fifty, or two hundred feet.

Figure 11B illustrates curing of the sealant 36 to plug the production tubing string 17 and the annulus 18. The sealant 36 may then be allowed to cure for a time, such as between one to five days, thereby forming a balanced plug 48. The cured balanced plug 48 may have a minimal density differential between a top and a bottom thereof, such as less than or equal to five percent. The cured balanced plug 48 may plug the annulus 18 adjacent to the production tubing string 17 and the bore of the production tubing string. Once the sealant 36 has cured, the packoff 30 may be used to pressure test the balanced plug 48. The packoff 30 may then be disengaged and retrieved to the support vessel 21.

Figure 12A illustrates cutting of the production tubing string 17. The second BHA 37 may be disconnected from the wireline 35 and a third BHA 49 connected to the wireline. The third BHA 49 may include a cablehead, a collar locator, an anchor, a second HPU, an electric motor, and the tubing cutter. The third BHA 49 may be lowered from the support vessel 21 into the production tubing bore. The third BHA 49 may be deployed to a cutting depth adjacent to the surface casing string 10. Once the third BHA 49 has been deployed to the cutting depth, the second HPU may be operated by supplying electrical power via the wireline 35 to set the anchor and extend blades of the tubing cutter and the motor operated to rotate the extended blades, thereby severing an upper portion of the production tubing string 17 from a lower portion thereof. The third BHA 49 and cut portion of the production tubing string may then be retrieved to the support vessel 21.

Alternatively, the tubing cutter may be a thermite torch or abrasive jet cutter.

Figure 12B illustrates setting of an upper bridge plug 50 in the production casing string 13. The third BHA 49 may be disconnected from the wireline 35 and the first BHA 34 reconnected to the wireline (with the upper bridge plug 50).

The first BHA 34 may be lowered from the support vessel 21 into the production casing bore. The first BHA 34 may be deployed to a setting depth adjacent to, such as just above, the top of the remaining production tubing string 17. Once the first BHA 34 has been deployed to the setting depth, electrical power may then be supplied to the first BHA via the wireline 35 to operate the setting tool, thereby expanding the upper bridge plug 50 against an inner surface of the production casing string 13. Once the upper bridge plug 50 has been set, the setting tool may be released from the set plug. The setting tool may then be retrieved to the support vessel 21. The diver 20 may then cut the production casing string 13 at the seafloor 5 and the scrap may be retrieved to the support vessel 21.

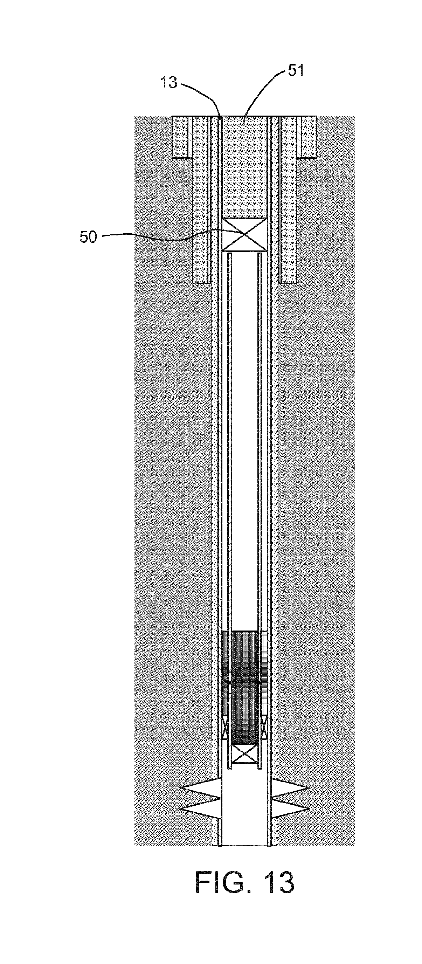

Figure 13 illustrates cement plugging of a bore of the production casing string 13. Once the upper bridge plug 50 has been set, cement slurry 51 may be pumped into the production casing bore down to the upper bridge plug 50 and allowed to cure, thereby forming a top cement plug and completing the abandonment operation.

Alternatively, the sealant 36 may be used to plug a terrestrial wellbore.

Figure 14 illustrates the diver 20 supplying the sealant 36 into the well and falling of the sealant down a bore of the production tubing string 17, according to another embodiment of the present disclosure. Alternatively, the tier-cut and packoff 30 may not be used especially if the completion 1 has been damaged at or below the seafloor 5. The diver 20 may then manually insert the lower end of the flow line 32 into the production tubing bore (shown) or the annulus 18 (not shown) and the sealant 36 injected therein. The sealant 36 may then fall down the production tubing bore or the annulus 18 to the perforations 38.

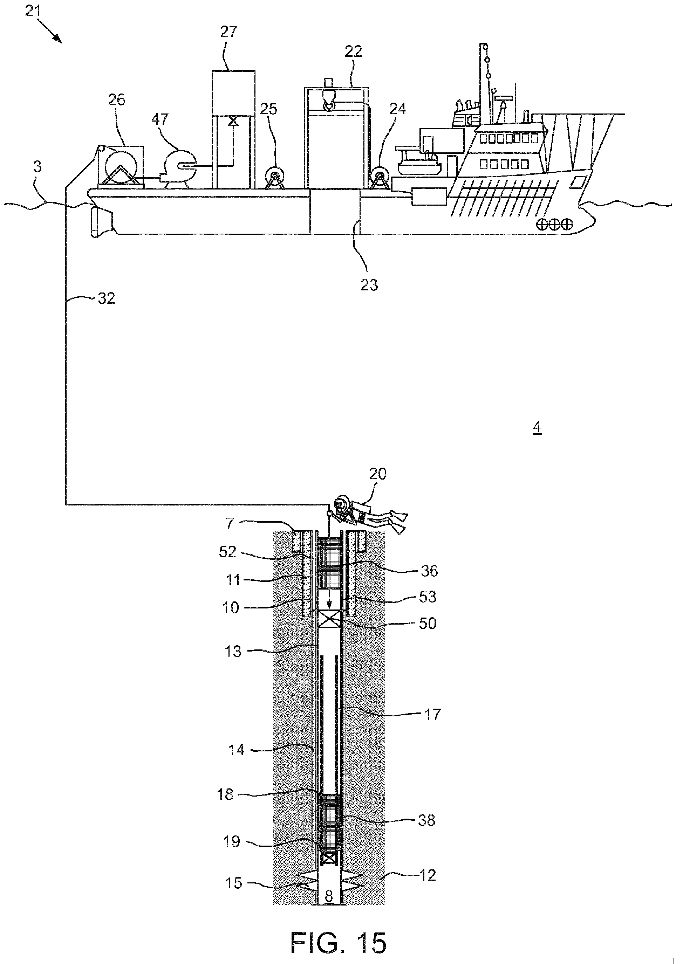

Figure 15 illustrates falling of the sealant 36 down the production casing bore to plug a casing annulus 52 of the well, according to another embodiment of the present disclosure. Alternatively, if an upper portion of the casing annulus 52 formed between the surface 10 and production 13 casing strings has not been cemented, the production casing string may be perforated and a second batch of sealant 36 mixed. The diver may then insert the lower end of the flow line 32 into the production casing bore (shown) or the casing annulus 52 (not shown) and the second batch of sealant 36 injected therein. The second batch of the sealant 36 may fall down the production casing bore or the casing annulus 52. A portion of the sealant may then be diverted by the upper bridge plug 50 (if injected into the bore) or top of cement 14 in the casing annulus 52 (if injected into the casing annulus) and through the perforations 53 and allowed to cure, thereby forming the balanced plug in the production casing bore and the casing annulus and obviating the need for the top cement plug.

Alternatively, the casing annulus 52 may be between the production casing string 13 and an intermediate casing string.

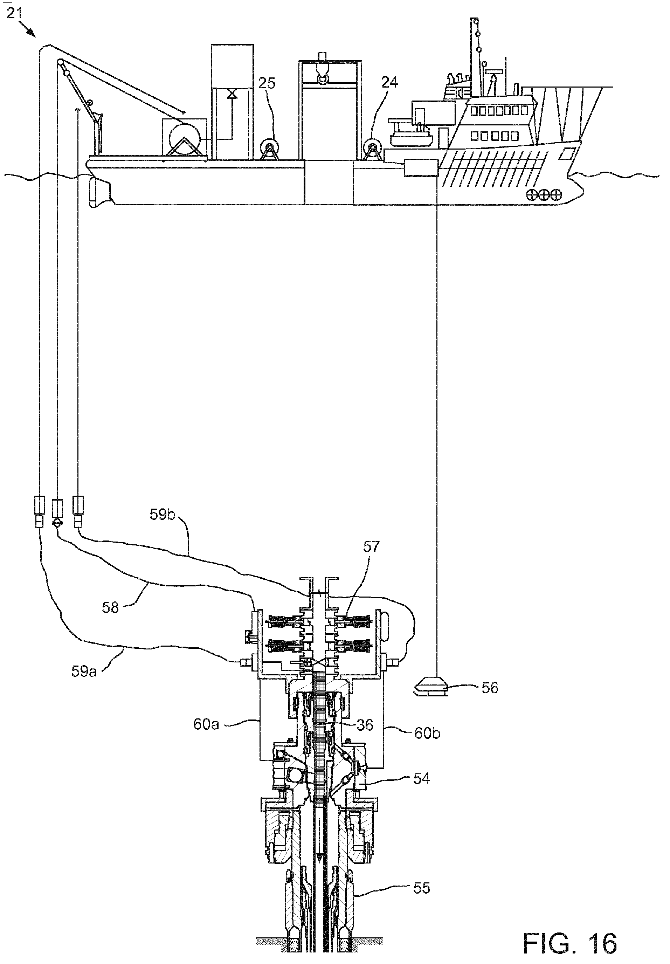

Figure 16 illustrates falling of the sealant 36 down a bore of a subsea production tree 54, according to another embodiment of the present disclosure. Alternatively, the sealant 36 may be used to plug a deeper subsea well having a subsea wellhead 55. An ROV 56 may be deployed to the tree 54 connected to the subsea wellhead 55. The ROV 56 may remove the external cap from the tree and carry the cap to the support vessel 21. The hosting winch 24 may then be used to lower a pressure control head 57 to the tree. The ROV 56 may guide landing of the pressure control head 57 onto the tree 54. An umbilical 58 and one or more (pair shown) flow lines 59a,b may be deployed from the support vessel 21 and connected to the pressure control head 57. One or more (pair shown) jumpers 60a,b may then be connected to the pressure control head 57 and the tree for operation of the tree 54 from a control van (not shown) onboard the vessel 21.

A seal head (not shown) may then be deployed from the support vessel 21 using the wireline winch 25 and landed on the pressure control head 57. A plug retrieval tool (PRT) (not shown) may be released from the seal head and electrical power supplied to the PRT via the wireline, thereby operating the PRT to remove crown plugs from the tree 54. A tree saver (not shown) may or may not then be installed in the production tree using a modified PRT. Once the crown plugs have been removed from the tree, the first BHA may be connected to the wireline and the seal head and deployed to the pressure control head.

Once the seal head has landed on the pressure control head, a subsurface safety valve (SSV) (not shown) may be opened and the first BHA may be deployed into the wellbore using the wireline. The first BHA may be deployed to the setting depth adjacent to the production packer and the lower bridge plug set against the inner surface of the production tubing string. The first BHA may be retrieved to the seal head and the seal head dispatched from the pressure control head 57 to the support vessel 21.

The second BHA may be connected to the wireline and the seal head and deployed to the pressure control head 57. Once the second BHA has landed on the pressure control head, the SSV may be opened and the second BHA may be deployed into the wellbore using the wireline. The second BHA may be deployed to the firing depth adjacent to the production packer and the perforations formed through the production tubing wall. The second BHA may be retrieved to the seal head and the seal head dispatched from the pressure control head to the support vessel.

The sealant 36 may be mixed and pumped down a first one 59a of the flow lines 59a,b, through the pressure control head 57, and into a bore of the production tree 54. The sealant 36 may then fall down through the production tree bore and into and down the production tubing bore until reaching the lower bridge plug. A portion of the sealant 36 may be diverted through the perforations and into the annulus adjacent to the production tubing until a depth of the sealant top in the annulus is equal to the depth of the sealant top in the production tubing bore. The sealant 36 may then be allowed to cure, thereby forming the balanced plug.

Alternatively, the sealant 36 may be pumped into the annulus adjacent to the production tubing by opening a lower annulus valve of the production tree 54 and pumping the sealant down a second one 59b of the flow lines 59a,b, through one of the jumpers 60a,b and an annulus passage of the tree, and into the subsea wellhead 55. The sealant 36 may then fall down through the annulus adjacent to the production tubing bore until reaching the production packer. A portion of the sealant may be diverted through the perforations and into the production tubing bore until the depth of the sealant top in the bore is equal to the depth of the sealant top in the annulus. The sealant may then be allowed to cure, thereby forming the balanced plug.

Advantageously, placement of the sealant 36 by falling allows plugging where the location is not accessible by conventional placement techniques. The epoxy sealant formulation can fall through well fluids and remain cohesive to form a set plug in a desired location. Typical cement slurries suffer dilution from contact with well fluid and must be separated therefrom using darts and/or wiper plugs.

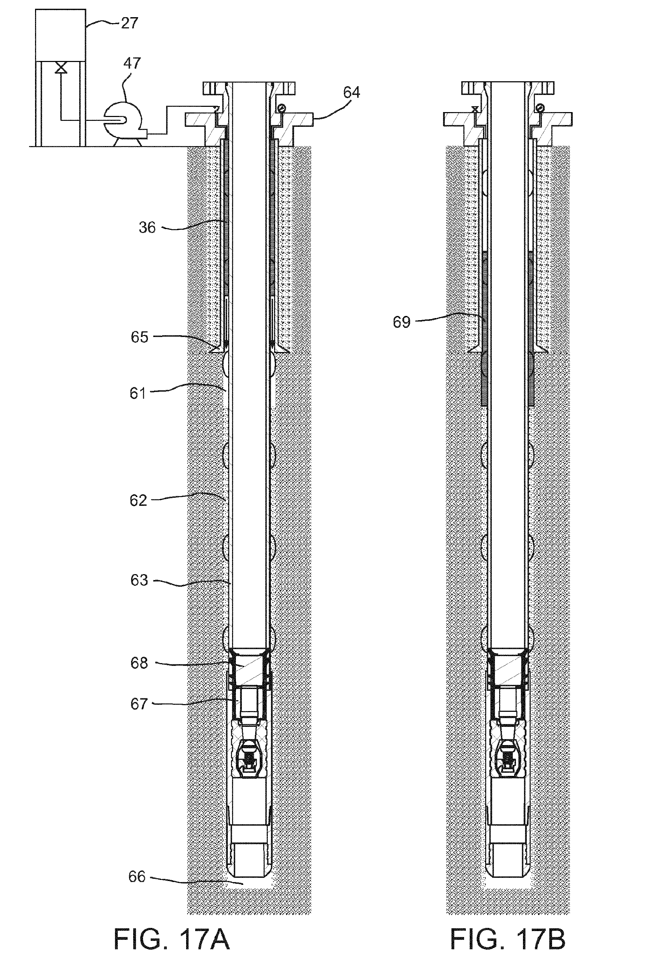

Figure 17A illustrates falling of the sealant 36 down an annulus 61 to remediate a primary cement sheath 62, according to another embodiment of the present disclosure. Figure 17B illustrates curing of the sealant 36 to plug the annulus 61. A production casing string 63 has been hung from a terrestrial wellhead 64 and a primary cementing operation conducted to seal the annulus 61 formed between the surface casing string 65 and the wellbore 66. The primary cementing operation included pumping a fluid train down a bore of the production casing string. The fluid train included a bottom wiper plug 67 followed by a slug of cement slurry which was followed by a top wiper plug 68. The fluid train was propelled through the production casing string 63 by pumping chaser fluid therein. The bottom wiper plug 67 landed in a float collar of the production casing string 63 and pumping of the chaser fluid continued to burst a diaphragm thereof, thereby allowing the cement slurry to flow therethrough and into the annulus 61. Pumping of the chaser fluid ceased in response to landing of the top wiper plug 68 onto the bottom wiper plug 67.

The intent of the primary cementing operation was to establish a top of the cement sheath 62 above a shoe of the surface casing string 65. However, due to overpressure in the annulus 61, some of the cement slurry was lost into the formation, thereby resulting in an actual cement top below the shoe of the surface casing string 65. The deficiency in the height of the cement sheath 62 unacceptably leaves an upper portion of the formation exposed to the annulus 61. To remedy this situation, an outlet of the delivery pump 47 may be connected to a valve of a port of the wellhead 64 in fluid communication with the annulus 61. The mixing unit 27 may be operated to supply the sealant 36 to the delivery pump 47 and the delivery pump may inject the sealant through the wellhead 64 and into the annulus 61. Once the sealant 36 has been pumped, the valve may be closed. Instead of seawater present in the annulus 61, the sealant may fall through brine, water, conditioner, drilling mud and/or spacer fluid. The sealant 36 may then fall down the annulus until reaching the top of the cement sheath 62. The sealant may be allowed to cure to form a plug 69 in a lower wellbore portion of the annulus 61 and an upper casing portion of the annulus, thereby effectively extending the actual top of the cement sheath 62 to the intended top of the cement sheath.

Alternatively, the quantity of sealant 36 injected into the annulus 61 may only be sufficient to plug the lower wellbore portion of the annulus.

Alternatively, the cement slurry may have been pumped in without maintaining sufficient pressure in the annulus 61 and gas from the formation may have infiltrated the cement slurry during setting, thereby compromising the integrity of the cement sheath even though the top of the cement sheath 62 is at the intended top. To remedy this situation, the sealant 36 may be injected into the annulus 61 and fall to the actual/intended top of the cement sheath 62, thereby plugging only the casing portion of the annulus.

Alternatively, the sealant may be used to remedy a defective cement plug in a subsea wellbore.

While the foregoing is directed to embodiments of the present disclosure, other and further embodiments of the disclosure may be devised without departing from the basic scope thereof, and the scope of the invention is determined by the claims that follow.

## Claims

1. A method for sealing a well, comprising:
placing an obstruction in a bore of an inner tubular string;
forming an opening through a wall of the inner tubular string above the obstruction;
mixing a resin and a hardener to form a sealant having a density greater than a density of fluid present in the bore and present in an annulus formed between the inner tubular string and an outer tubular string; and
injecting the sealant into the annulus,
**characterized in that**:
the sealant falls down the annulus to the opening,
a portion of the sealant is diverted through the opening and into the bore, and
the sealant cures to form a balanced plug in the annulus and the bore.

2. The method of claim 1, wherein:
the wellbore is a subsea wellbore,
the method further comprises severing an upper portion of a completion of the well from a lower portion thereof prior to injecting the sealant, and
the sealant is injected from a support vessel via a flow line having a lower end adjacent to a floor of the sea.

3. The method of claim 1, wherein:
the wellbore is a subsea wellbore having a subsea wellhead,
a pressure control head is connected to the subsea wellhead, and
the sealant is injected from a support vessel via a flow line having a lower end connected to the pressure control head.

4. The method of claim 1, wherein:
the resin is bisphenol F epoxide,
the hardener is selected from a group consisting of:
an aliphatic amine or polyamine or a cycloaliphatic amine or polyamine for a low temperature well, and
an aromatic amine or polyamine for a high temperature well, and
the resin is premixed with a diluent selected from a group consisting of alkyl glycidyl ether, benzyl alcohol, or a combination thereof.

5. The method of claim 4, wherein the hardener is selected from a group consisting of tetraethylenepentamine for the low temperature well and diethyltoluenediamine for the high temperature well.

6. The method of claim 1, wherein the density of the sealant is up to 5% greater than the density of the present fluid.

7. The method of claim 1, wherein a viscosity of the sealant is between 100-2,000 cp.

8. The method of claim 1, wherein a thickening time of the sealant equals:
a time required to inject the sealant into the annulus or bore,
plus a time required for the sealant to fall down the annulus or the bore, and
plus a safety factor.

9. The method of claim 1, wherein:
a weighting material is also mixed with the resin and the hardener, and
the weighting material has a specific gravity of at least 2.

10. The method of claim 9, wherein the weighting material is selected from a group consisting of: barite, hematite, hausmannite ore, and sand.

11. The method of claim 1, wherein the sealant is diverted by a member selected from a group consisting of: a production packer, a bridge plug, and a top of cement present in the annulus.

12. The method of claim 1, wherein the opening is formed by firing a perforating gun.

13. The method of claim 1, wherein a density of the balanced plug varies less than or equal to five percent from top to bottom.

14. The method of claim 1, wherein:
the resin is premixed with a bonding agent, and
the bonding agent is silane.

15. The method of claim 1, wherein the resin is premixed with a surfactant to maintain cohesion of the sealant falling through the fluid.
